# EUROPEAN PATENT SPECIFICATION

(11) **EP 1 943 468 B1**
(45) Date of publication and mention of the grant of the patent: **26.04.2017**
(21) Application number: 07715547.1
(22) Date of filing: 08.03.2007
(51) Int. Cl.: F24F 3/14

(54) **DEHUMIDIFYING COOLING DEVICE FOR DISTRICT HEATING**
ENTFEUCHTUNGSKÜHLGERÄT FÜR EINE FERNHEIZUNG
DISPOSITIF DE DÉSHUMIDIFICATION PAR REFROIDISSEMENT POUR CHAUFFAGE URBAIN

(30) Priority: 01.02.2007 KR 20070010671
(43) Date of publication of application: 16.07.2008
(73) Proprietor: Korea District Heating Corp., Bundang-gu Seongnam-si, Gyeonggi-do 463-908 (KR)
(72) Inventor: YOON, Seok-Mann, Incheon 402-040 (KR); LEE, Dae-Young, Seoul 130-060 (KR); LEE, Hoon, Yongin-si, Gyeonggi-do 448-548 (KR); KANG, Chang-Ku, Seoul 136-854 (KR); JEONG, Sung-Ook, Seoul 138-741 (KR)
(74) Representative: Ter Meer Steinmeister & Partner
(86) International application number: PCT/KR2007/001147
(87) International publication number: WO 2008/041787

(56) References cited:
- JP-A- 09 243 140
- JP-A- 2002 013 759
- KR-A- 940 009 622
- KR-B1- 100 550 575
- KR-Y1- 200 197 787
- US-A- 5 943 874
- US-A- 6 003 327
- WOREK W M ET AL: "ADVANCES IN HEAT-ACTIVATED COOLING SYSTEMS", MECHANICAL ENGINEERING, ASME. NEW YORK, US, vol. 118, no. 8, 1 August 1996 (1996-08-01), page 54/55, XP000622353, ISSN: 0025-6501

## Description

### [Technical Field]

The present invention relates to a dehumidifying cooling device for district heating, and more particularly, to a dehumidifying cooling device for district heating which can carry out an air cooling operation by use of hot water supplied by large-scale or small-scale district heating systems and gas or oil boilers installed in individual households.

### [Background Art]

There is spreading a prospect that the recent high oil price situation is not a temporary problem, but is continuously maintained and fixed. Thereby, main energy consuming countries of the world increasingly take a great effort for securing stable energy resources. With the effectuation of the Tokyo protocol dealing with a reduction in the discharge of greenhouse gas for the sake of preventing global warming, it will be expected that an international pressure about the use limit of fossil energy, the criterion of energy efficiency, etc. will be strengthened.

According to the published energy report, the amount of energy consumed in domestic and business fields of Korean in 2003 is approximately 55 millions TOE a year, and occupies 25.2% of the total national consumption energy. This rate also corresponds to 41.9% on the basis of electricity. For the past four years, the energy consumption of domestic and business fields shows an average annual rate of increase of 5.3%, whereas the consumption of electricity shows an average annual rate of increase of 12%. Accordingly, it will be appreciated that the consumption of electricity particularly has a rapid increase. Estimating on the basis of a variation in the monthly energy consumption of residential buildings and sample survey results about non-residential buildings as the subject of energy controlment, it is analyzed that 50% of the energy consumption of residential buildings and 47% of the energy consumption of business buildings are used for air conditioning. In conclusion, of the energy consumption of buildings, energy required for air conditioning occupies 13% of the national total energy consumption of Korea.

Accordingly, to guarantee the efficient use of energy and the continuous development of energy industry while observing related international agreements, it is necessary to improve the use efficiency of energy for air conditioning in domestic and business fields. From this viewpoint, there is put in force a so-called collective-energy industry in which thermal energy and electricity, generated from energy generation facilities concentrated on a specific place for improving the use efficiency of energy in domestic and business fields, are supplied collectively to a plurality of users in residential and business areas. It is reported that the collective-energy industry utilizes waste heat occurred during power generation as a heating source for space heating and hot water heating, thereby achieving not only a reduction of energy by approximately 20 to 30% by virtue of an improved use efficiency of energy, but also an improvement of air environment by approximately 30 to 40% by virtue of a reduction usage of fuel and intensive environmental managements. The collective-energy industry is evaluated as an effective industry capable of dealing with related international environmental restrictions including a climatic change convention, etc. In the affirmative evaluation's debt, in Korea, approximately 1.2 million families share in the benefits of district heating in 2003, and in particular, 85% of supplied energy is generated by combined heat and power generation. Korea has a plan to expand the propagation range of district heating to 2 million families by 2010.

In the combined heat and power generation, namely, cogeneration, the generation ratio of electricity to heat is fixed at 3 : 5. Therefore, it is important to keep the ratio of electricity to heat at an appropriate level for maximizing the effect of the collective-energy industry. In Korea, the above mentioned generation ratio can be fulfilled in winter, but the summer of Korea has an increased electricity load for air cooling and substantially no heat load. As a result, the operation rate of distinct heating in summer decreases to less than 10%, and this causes a deterioration in the economical efficiency of cogeneration. Actually, no generation results reported between June and September in 2003.

To improve the operation rate of collective-energy generation facilities for sufficiently utilizing the effects of the industry, excavating the demand of heat in summer is necessary, and in particular, development and propagation of a technology for supplying cooling energy using distinct heating facilities is necessary.

In one example of the above described cooling energy supply technology, an absorption chiller is installed to a receptor, such as a large-scale building, etc. such that the chiller performs a central cooling operation using energy delivered from distinct heating facilities.

The absorption chiller is designed to chill water flowing in a pipe by use of heat generated during the evaporation of a liquid-phase refrigerant and condense the evaporated gas-phase refrigerant for the reuse thereof.

### [Disclosure]

### [Technical Problem]

However, despite of various researches and developments for improving the performance thereof, the absorption chiller has a limit in the improvement of performance due to a low temperature of a heating source. In addition, the absorption chiller has an uneconomical high water return temperature because it cannot use water having a temperature of 80°C or less, and suffers from a little difference between the temperature of supplied water and the temperature of water to be returned.

When the absorption chiller is installed to an apartment, etc. occupying the most part of district heating, so as to carry out a central cooling operation, there is a problem in that cold water pipes have to be additionally installed regardless of hot water supply pipes.

Therefore, the present invention has been made in view of the above problems, and it is an object of the present invention to provide a above mentioned generation ratio can be fulfilled in winter, but the summer of Korea has an increased electricity load for air cooling and substantially no heat load. As a result, the operation rate of distinct heating in summer decreases to less than 10%, and this causes a deterioration in the economical efficiency of cogeneration. Actually, no generation results reported between June and September in 2003.

To improve the operation rate of collective-energy generation facilities for sufficiently utilizing the effects of the industry, excavating the demand of heat in summer is necessary, and in particular, development and propagation of a technology for supplying cooling energy using distinct heating facilities is necessary.

In one example of the above described cooling energy supply technology, an absorption chiller is installed to a receptor, such as a large-scale building, etc. such that the chiller performs a central cooling operation using energy delivered from distinct heating facilities.

The absorption chiller is designed to chill water flowing in a pipe by use of heat generated during the evaporation of a liquid-phase refrigerant and condense the evaporated gas-phase refrigerant for the reuse thereof.

US 5,943 874 A discloses a dehumidifying cooling device having a wet channel, a dry channel, a sensible heat exchanger, a heating coil, and a dehumidifying wheel according to the preamble of claim 1.

US 6,003,327 A discloses an air conditioning system for conditioning a process stream of air wherein the air is dehumidified and cooled to provide a conditional stream of air, the system comprised off and adsorption wheel, means for passing a first portion and a second portion, a heat exchanger in fluid communication with said adsorption wheel, and a heater. Further, an indirect evaporative cooler is connected to the heater to receive air therefrom. An output of the indirect evaporative cooler is connected to a direct evaporative cooler which supplies air to a conditioned space.

Worek W.M. et al.: "Advances in Heat-Activated Cooling Systems", Mechanical Engineering, ASME, New York, US, Col. 118, No. 8, 01.08.996, page 54/55, XP000622353 discloses heat-activated cooling systems having evaporative coolers and regeneration heaters.

### [Disclosure]

### [Technical Problem]

supply hole and the sensible heat exchanger and serving to cool the circulated air in the dry channel, which was dehumidified to high-temperature dry air by the dehumidifying wheel and subsequently, heat exchanged and cooled by the sensible heat exchanger, the cooled circulated air being delivered to the air supply hole of the case.

Preferably, the device further comprises: a direct-evaporative cooler installed in the dry channel at a position in front of the regenerative-evaporative cooler, the direct-evaporative cooler serving to carry out a secondary cooling operation of the circulated air discharged from the regenerative-evaporative cooler.

Preferably, the device further comprises: a first filter installed between the outside air suction hole and the sensible heat exchanger and serving to remove impurities contained in the outside air; and an exhaust blower installed between the dehumidifying wheel and the exhaust hole and serving to forcibly discharge the outside air from the wet channel through the exhaust hole, wherein the first filter and the exhaust blower are installed in the wet channel.

Preferably, the device further comprises: a second filter installed between the circulated air suction hole and the dehumidifying wheel and serving to remove impurities contained in the circulated air; and an air supply blower installed between the dehumidifying wheel and the sensible heat exchanger and serving to forcibly discharge the cooled circulated air from the dry channel through the air supply hole, wherein the second filter and the air supply blower are installed in the dry channel.

Preferably, the case is further provided with a cooler exhaust hole for discharging high-temperature air generated while the regenerative-evaporative cooler carries out a secondary cooling operation.

Preferably, the amount of the high-temperature air to be discharged through the cooler exhaust hole is 30% of the total circulated air.

Preferably, the hot water to be introduced into the heating coil is delivered from any one selected from among a cogeneration plant, a heating boiler, a micro-turbine, a small gas engine, a small gas turbine, a gas boiler, and an oil boiler.

Preferably, the circulated air suctioned through the circulated air suction hole is mixed with the outside air by a predetermined mixing ratio of 7 : 3.

### [Advantageous Effects]

According to a dehumidifying cooling device for district heating of the present invention having the above described configuration, it is possible to carry out an air cooling operation by use of hot water supplied by large-scale or small-scale district heating systems and gas or oil boilers installed in individual households. Accordingly, the present invention has the effect of achieving a reduced device size via the implementation of the cooling operation under the atmospheric pressure state, and reducing manufacturing costs by virtue of a simplified system configuration.

### [Description of Drawings]

The above and other objects, features and other advantages of the present invention will be more clearly understood from the following detailed description taken in conjunction with the accompanying drawings, in which:
FIG. 1 is a view illustrating the configuration of a dehumidifying cooling device for district heating according to the present invention;
FIG. 2 is a view illustrating the flow of air in the dehumidifying cooling device for district heating according to the present invention; and
FIG. 3 is a graph illustrating the temperature distribution of humid air used in the dehumidifying cooling device for district heating according to the present invention.

### [Best Mode]

Now, the configuration of a dehumidifying cooling device for district heating according to the present invention will be described in detail with reference to the accompanying drawings.

In the following description of the present invention, a detailed description of known functions and configurations incorporated herein will be omitted when it may make the subject matter of the present invention rather unclear. Also, the terms used in the following description are terms defined taking into consideration the functions obtained in accordance with the present invention. The definitions of these terms should be determined based on the whole content of this specification because they may be changed in accordance with the option of a user or operator or a usual practice.

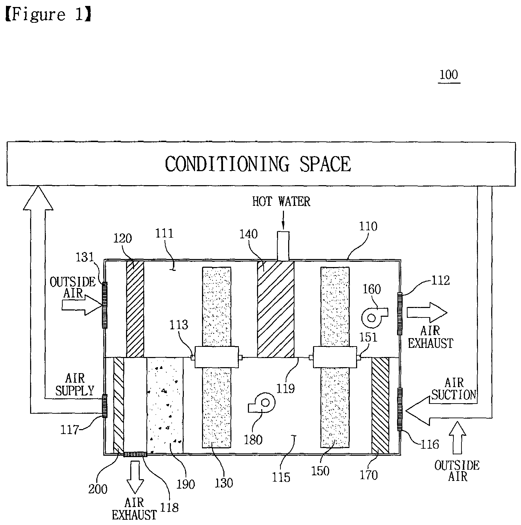

FIG. 1 is a view illustrating the configuration of a dehumidifying cooling device for district heating according to the present invention.

Referring to FIG. 1, the dehumidifying cooling device 100 according to the present invention comprises a case 110, a first filter 120, a sensible heat exchanger 130, a heating coil 140, a dehumidifying wheel 150, an exhaust blower 160, a second filter 170, an air supply blower 180, a regenerative-evaporative cooler 190, and a direct-evaporative cooler 200.

The case 110 is made of a metallic material and has a rectangular box shape. The case 110 is installed with a partition 119 to divide the interior of the case 110 into a wet channel 111 and a dry channel 115. The case 110 has an outside air suction hole 113 provided at one end of the wet channel 111 for introducing outside air into the wet channel 111 and an exhaust hole 112 provided at the other end of the wet channel 111 for discharging the outside air. The case 110 also has a circulated air suction hole 116 provided at one end of the dry channel 115 for introducing circulated air from a conditioning space CS into the dry channel 115 and an air supply hole 117 provided at the other end of the dry channel 115 for supplying cooling air into the conditioning space CS. The dry channel 115 of the case 110 is further provided with a cooler exhaust hole 118 for discharging high-temperature air generated while the regenerative-evaporative cooler 190 carries out a secondary cooling operation that will be described hereinafter. The circulated air, introduced into the case 110 through the circulated air suction hole 116, is mixed with the outside air at a ratio of 7 : 3, to keep the interior of the case 110 in the atmospheric pressure state.

The first filter 120 is located in the wet channel 111 of the case 110 at a position between the outside air suction hole 113 and the sensible heat exchanger 130. The first filter 120 is used to remove impurities and bad smell contained in the suctioned outside air. Preferably, the first filter 120 is an antibacterial filter, and is easily separable from the case 110.

The sensible heat exchanger 130 has a rotating shaft 131 installed in the same direction as the partition 119 and takes the form of a disc to rotate about the rotating shaft 131 inside the wet channel 111 and the dry channel 115 of the case 110. The sensible heat exchanger 130 is used to heat exchange the outside air introduced into the wet channel 111 through the outside air suction hole 113 with the circulated air introduced into the dry channel 115. The sensible heat exchanger 130 takes the form of a honeycomb-patterned disc fabricated by processing a thin plate, such as an aluminum plate, etc. The sensible heat exchanger 130 carries out a primary heat exchange operation for lowering the temperature of the circulated air that is dehumidified by passing through the dehumidifying wheel 150 that will be described hereinafter. There are provided an additional motor and belt (not shown) for rotation of the sensible heat exchanger 130.

The heating coil 140 is located in the wet channel 111 of the case 110 at a position between a rear end of the sensible heat exchanger 130 and the exhaust hole 112. The heating coil 140 is used to raise the temperature of the outside pair passing through the wet channel 111 by use of heat of hot water introduced thereinto. The hot water introduced into the heating coil 140 is delivered from any one selected from among a cogeneration plant, a heating boiler, a micro-turbine, a small gas engine, a small gas turbine, a gas boiler, and an oil boiler, and has a temperature within a range of 60 to 120 °C.

The dehumidifying wheel 150 has a rotating shaft 151 installed in the same direction as the partition 119, and takes the form of a disc to rotate about the rotating shaft 151 inside the wet channel 111 and the dry channel 115 of the case 110. The dehumidifying wheel 150 is located behind the heating coil 140 and serves to adsorb and remove moisture contained in the circulated air within the dry channel 115. The dehumidifying wheel 150 is regenerated by evaporating the adsorbed moisture to thereby supply the moisture into the high-temperature outside air within the wet channel 111. The dehumidifying wheel 150 takes the form of a honeycomb-patterned disc containing an adsorbent, such as silica gel, zeolite, or the like, for adsorbing the moisture contained in the circulated air in a dry adsorption manner. There are provided an additional motor and belt (not shown) for rotation of the dehumidifying wheel 150.

The exhaust blower 160 is installed in the wet channel 111 of the case 110 at a position between the dehumidifying wheel 150 and the exhaust hole 112, and used to forcibly discharge the outside air from the wet channel 111.

The second filter 170 is installed in the dry channel 115 of the case 110 at a position between the circulated air suction hole 116 and the dehumidifying wheel 150 and used to remove impurities and bad smell contained in the circulated air. Preferably, the second filter 170 is an antibacterial filter, and is easily separable from the case 110.

The air supply blower 180 is installed in the dry channel 115 of the case 110 at a position in front of the dehumidifying wheel 150 and used to forcibly discharge the circulated air from the dry channel 115 through the circulated air supply hole 117.

The regenerative-evaporative cooler 190 is installed in the dry channel 115 at a position between the circulated air supply hole 117 and the sensible heat exchanger 130. If the circulated air introduced into the dry channel 115 is dehumidified by the dehumidifying wheel 150 so as to be changed to high-temperature dry air and subsequently, heat exchanged and cooled by the sensible heat exchanger 130, the regenerative-evaporative cooler 190 further cools the circulated air. The cooled circulated air is delivered to the air supply hole 117 of the case 110, whereas the high-temperature air generated during cooling is delivered to the cooler exhaust hole 118. Here, the amount of the high-temperature air to be discharged through the cooler exhaust hole 118 is 30% of the total circulated air. The interior of the regenerative-evaporative cooler 190 is divided into a dry channel and a wet channel. If a part of the air, passing through the dry channel, is delivered into the wet channel, the air is cooled as water is evaporated by the high-temperature surface of the wet channel, thereby acting to absorb heat from the remaining higher temperature air passing through the dry channel. Thereby, the air passing through the dry channel can be cooled to a dew-point temperature to the maximum extent without an increase of humidity. The configuration of the regenerative-evaporative cooler 190 is disclosed in Korea Patent Registration No. 0409265 and thus, a detailed description thereof will be omitted herein.

The direct-evaporative cooler 200 is installed in the dry channel 115 of the case 110 at a position in front of the regenerative-evaporative cooler 190. The direct-evaporative cooler 200 serves to carry out a secondary cooling operation of the circulated air from the regenerative-evaporative cooler 190, so as to supply the resulting air into the conditioning space CS through the air supply hole 117 of the case 110.

Hereinafter, the operation and effects of the dehumidifying cooling device for district heating according to the present invention will be described in detail with reference to FIGS. 1 to 3.

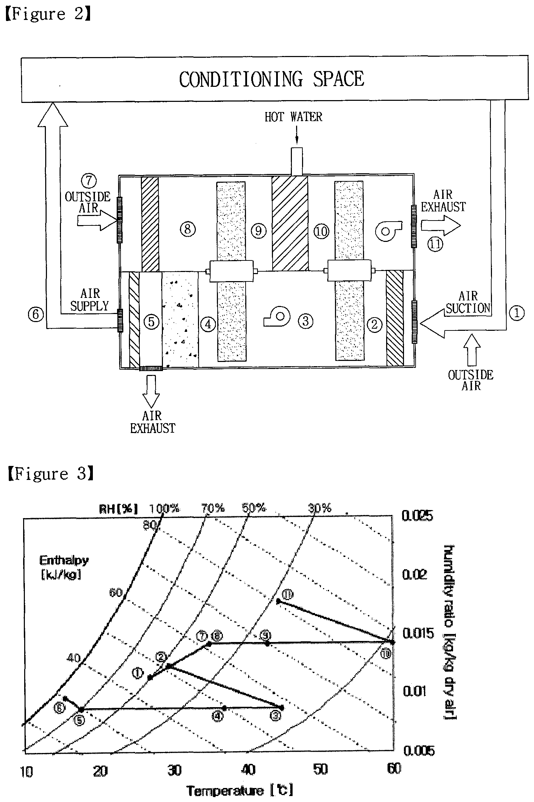

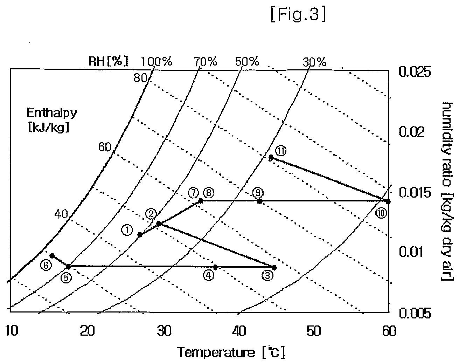

FIG. 2 is a view illustrating the flow of air in the dehumidifying cooling device for district heating according to the present invention, and FIG. 3 is a graph illustrating the temperature distribution of humid air used in the dehumidifying cooling device.

Explaining first a dehumidifying cooling operation carried out in the dry channel 115, circulated air from the conditioning space CS, which is mixed with high-temperature and high-humidity outside air, is introduced into the dry channel 115 of the case 110 through the circulated air suction hole 116 under the operation of the air supply blower 180. After passing through the second filter 170, the introduced circulated air sequentially passes through the dehumidifying wheel 150 such that the moisture contained in the circulated air is removed by the adsorbent.

The dehumidified circulated air is heated by adsorptive heat generated from the surface of the dehumidifying wheel 150. The resulting high-temperature and low-humidity circulated air is heat exchanged with the outside air in the wet channel 111 by the sensible heat exchanger 130. Thereby, the circulated air is changed to the low-temperature air prior to being introduced into the regenerative-evaporative cooler 190.

If the circulated air is introduced into the regenerative-evaporative cooler 190, 70% of the circulated air is cooled while passing through the regenerative-evaporative cooler 190, and 30% of the circulated air is discharged to the outside through the cooler exhaust hole 118.

The circulated air, having passed through the regenerative-evaporative cooler 190, is secondarily cooled while passing through the direct-evaporative cooler 200, thereby being supplied into the conditioning space CS through the air supply hole 117 of the case 110.

Next, explaining a heat-exchange operation carried out in the wet channel 111, high-temperature and high-humidity outside air is introduced into the wet channel 111 through the outside air suction hole 113 and passes through the first filter 120 under the operation of the exhaust blower 160. Then, the filtered outside air is heat exchanged with the circulated air in the dry channel 115 by the sensible heat exchanger 130 such that the temperature of the outside air is raised. Thereby, the outside air with the raised temperature passes through the heating coil 140.

While passing through the heating coil 140, the temperature of the outside air is further raised by hot water supplied into the heating coil 140. Thereby, the outside air to be delivered into the dehumidifying wheel 150 has a significantly raised temperature.

As the dehumidifying wheel 150 rotates in a state of adsorbing moisture therein, the outside air forcibly evaporates moisture thereof while passing through the dehumidifying wheel 150, and thereafter, is discharged to the outside through the exhaust hole 112. Through the above described process, the surface of the dehumidifying wheel 150 is returned to an original dried state thereof, thereby recovering a dehumidifying ability thereof.

Referring to FIGS. 2 and 3, in the dehumidifying cooling device for district heating according to the present invention, if circulated air ① is introduced into the case, the circulated air ① is mixed with outside air ⑦, to produce mixed air ② having a raised temperature and absolute humidity. While passing through the dehumidifying wheel, the mixed air ② is changed to higher-temperature and lower absolute-humidity air ③.

Then, the air ③ is heat exchanged with outside air ⑧ in the wet channel while passing through the sensible heat exchanger such that the heat exchanged air ④ has a slight drop only in temperature. In sequence, while passing through the regenerative-evaporative cooler, the temperature of the air ④ is rapidly lowered to produce significantly cooled air ⑤. Thereafter, while passing through the direct-evaporative cooler, the temperature of the air ⑤ is further lowered slightly, but the absolute humidity of the air ⑤ is raised, thereby resulting in cooling air ⑥.

Meanwhile, when the introduced outside air ⑦ passes through the first filter, the filtered air ⑧ has the same temperature and absolute humidity as those of the air ⑦. The air ⑧ is heat exchanged with the circulated air ③ in the dry channel while passing through the sensible heat exchanger. The resulting heat exchanged air ⑨ is slightly raised in temperature, but keeps the same absolute humidity as that of the air ⑧. Then, the temperature of the air ⑨ is rapidly raised while passing through the heating coil, resulting in high-temperature air ⑩.

The air ⑩ is dropped in temperature, but raised in absolute humidity in the course of passing through the dehumidifying wheel, thereby being changed to low-temperature and high-humidity air ⑪.

In conclusion, in the dehumidifying cooling device for district heating according to the present invention, air to be supplied into a conditioning indoor space is subjected to the transfer of heat and moisture via a direct contact with the dehumidifying cooling device. This has the effect of achieving excellent transfer efficiency and producing and supplying cooling air with a low-temperature heating source of 60°C. Further, differently from conventional absorptive devices, the dehumidifying cooling device is operable in the atmospheric pressure state and has a simplified configuration, resulting in a considerable reduction of manufacturing costs.

### [Industrial Applicability]

As apparent from the above description, a dehumidifying cooling device according to the present invention can be installed to residential and business buildings, etc. using hot water delivered from district heating facilities, so as to utilize the hot water as a source for cooling a room.

Although the preferred embodiments of the present invention have been disclosed for illustrative purposes, those skilled in the art will appreciate that various modifications are possible within the scope of the invention as disclosed in the accompanying claims.

## Claims

1. A dehumidifying cooling device for district heating comprising:
- a case (110) having a partition (119) to divide the interior of the case (110) into a wet channel (111) and a dry channel (115), the wet channel (111) being provided, at one end thereof, with an outside air suction hole (113) for introducing outside air into the wet channel (111) and, at the other end thereof, with an exhaust hole (112) for discharging the outside air, the dry channel (115) being provided, at one end thereof, with a circulated air suction hole (116) for introducing circulated air from a conditioning space into the dry channel (115) and, at the other end thereof, with an air supply hole for supplying cooling air into the conditioning space;
- a sensible heat exchanger (130) configured to rotate about the partition (119) and serving to heat exchange the outside air, introduced into the wet channel (111) through the outside air suction hole (113), with the circulated air introduced into the dry channel (115);
- a heating coil (140) installed in the wet channel (111) at a position between a rear end of the sensible heat exchanger (130) and the exhaust hole (112) and serving to raise the temperature of the outside air passing through the wet channel (111) by use of heat of hot water introduced into the heating coil (140);
- a dehumidifying wheel (150) configured to rotate about the partition (119) at a position behind the heating coil (140) and serving to adsorb and remove moisture contained in the circulated air within the dry channel (115), the dehumidifying wheel (150) being regenerated by evaporating the adsorbed moisture to thereby supply the evaporated moisture into the high-temperature outside air in the wet channel (111); **characterized by**
- a regenerative-evaporative cooler (190) installed in the dry channel (115) at a position between the circulated air supply hole and the sensible heat exchanger (130) and serving to cool the circulated air in the dry channel (115), which was dehumidified to high-temperature dry air by the dehumidifying wheel (150) and subsequently, heat exchanged and cooled by the sensible heat exchanger (130), the cooled circulated air being delivered to the air supply hole of the case (110).

2. The device according to claim 1, further comprising:
- a direct-evaporative cooler (200) installed in the dry channel (115) at a position in front of the regenerative-evaporative cooler (190), the direct-evaporative cooler (200) serving to carry out a secondary cooling operation of the circulated air discharged from the regenerative-evaporative cooler (190).

3. The device according to claim 1, further comprising:
- a first filter (120) installed between the outside air suction hole (113) and the sensible heat exchanger (130) and serving to remove impurities contained in the outside air; and
- an exhaust blower installed between the dehumidifying wheel (150) and the exhaust hole (112) and serving to forcibly discharge the outside air from the wet channel (111) through the exhaust hole (112), wherein the first filter (120) and the exhaust blower are installed in the wet channel (111).

4. The device according to claim 1, further comprising:
- a second filter (170) installed between the circulated air suction hole (116) and the dehumidifying wheel (150) and serving to remove impurities contained in the circulated air; and
- an air supply blower (180) installed between the dehumidifying wheel (150) and the sensible heat exchanger (130) and serving to forcibly discharge the cooled circulated air from the dry channel (115) through the air supply hole, wherein the second filter (170) and the air supply blower (180) are installed in the dry channel (115).

5. The device according to claim 1, wherein the case (110) further has a cooler exhaust hole (118) provided at the dry channel (115) for discharging high-temperature air generated while the regenerative-evaporative cooler (190) carries out a secondary cooling operation.

6. The device according to claim 5, wherein the amount of the high- temperature air to be discharged through the cooler exhaust hole (118) is 30% of the total circulated air.

7. The device according to claim 1, wherein the hot water to be introduced into the heating coil (140) is delivered from any one selected from among a cogeneration plant, a heating boiler, a micro-turbine, a small gas engine, a small gas turbine, a gas boiler, and an oil boiler.

8. The device according to claim 1, wherein the circulated air suctioned through the circulated air suction hole (116) is mixed with the outside air by a predetermined mixing ratio.

9. The device according to claim 1, wherein the predetermined mixing ratio of the circulated air to the outside air is 7 : 3.

## Patentansprüche

1. Entfeuchtungskühlvorrichtung zur Fernheizung, die Folgendes umfasst:
- ein Gehäuse (110), das eine Unterteilung (119) aufweist, um den Innenraum des Gehäuses (110) in einen Nasskanal (111) und einen Trockenkanal (115) zu unterteilen, wobei der Nasskanal (111) an einem Ende davon zum Einbringen von Außenluft in den Nasskanal (111) mit einem Außenluftansaugloch (113) und am anderen Ende davon zum Auslassen der Außenluft mit einem Auslassloch (112) versehen ist, wobei der Trockenkanal (115) an einem Ende davon zum Einbringen der zirkulierten Luft aus einem Bearbeitungsraum in den Trockenkanal (115) mit einem Ansaugloch (116) für die zirkulierte Luft und am anderen Ende davon zum Zuführen von Kühlluft in den Bearbeitungsraum mit einem Luftzuführloch versehen ist;
- eine Austauscheinrichtung (130) für fühlbare Wärme, die konfiguriert ist, sich um die Unterteilung (119) zu drehen, und dazu dient, den Wärmeaustausch zwischen der Außenluft, die durch das Außenluftansaugloch (113) in den Nasskanal (111) eingebracht wird, und der zirkulierten Luft, die in den Trockenkanal (115) eingebracht wird, durchzuführen;
- eine Heizspule (140), die an einer Position zwischen einem rückseitigen Ende der Austauscheinrichtung (130) für fühlbare Wärme und dem Auslassloch (112) im Nasskanal (111) eingebaut ist und dazu dient, unter Verwendung der Wärme von heißem Wasser, das in die Heizspule (140) eingebracht wird, die Temperatur der Außenluft, die durch den Nasskanal (111) strömt, zu erhöhen;
- ein Entfeuchtungsrad (150), das konfiguriert ist, sich an einer Position hinter der Heizspule (140) um die Unterteilung (119) zu drehen, und dazu dient, die Feuchtigkeit, die in der zirkulierten Luft im Trockenkanal (115) enthalten ist, zu adsorbieren und zu entfernen, wobei das Entfeuchtungsrad (150) durch Verdampfen der adsorbierten Feuchtigkeit wiederaufbereitet wird, um dadurch die verdampfte Feuchtigkeit der Hochtemperaturaußenluft im Nasskanal (111) zuzuführen; **gekennzeichnet durch**
- einen Wiederaufbereitungsverdampfungskühler (190), der an einer Position zwischen dem Zuführloch für die zirkulierte Luft und der Austauscheinrichtung (130) für fühlbare Wärme im Trockenkanal (115) eingebaut ist und dazu dient, die zirkulierte Luft im Trockenkanal (115) zu kühlen, die **durch** das Entfeuchtungsrad (150) zu einer trockenen Hochtemperaturluft entfeuchtet und anschließend **durch** die Austauscheinrichtung (130) für fühlbare Wärme einem Wärmeaustausch unterzogen und gekühlt wurde, wobei die gekühlte, zirkulierte Luft dem Luftzuführloch des Gehäuses (110) zugeführt wird.

2. Vorrichtung nach Anspruch 1, die ferner Folgendes umfasst:
- einen Direktverdampfungskühler (200), der an einer Position vor dem Wiederaufbereitungsverdampfungskühler (190) im Trockenkanal (115) eingebaut ist, wobei der Direktverdampfungskühler (200) dazu dient, einen sekundären Kühlvorgang der zirkulierten Luft, die vom Wiederaufbereitungsverdampfungskühler (190) ausgelassen wird, auszuführen.

3. Vorrichtung nach Anspruch 1, die ferner Folgendes umfasst:
- einen ersten Filter (120), der zwischen dem Außenluftansaugloch (113) und der Austauscheinrichtung (130) für fühlbare Wärme eingebaut ist und dazu dient, in der Außenluft enthaltene Verunreinigungen zu entfernen; und
- ein Auslassgebläse, das zwischen dem Entfeuchtungsrad (150) und dem Auslassloch (112) eingebaut ist und dazu dient, die Außenluft aus dem Nasskanal (111) durch das Auslassloch (112) zwingend auszulassen, wobei der erste Filter (120) und das Auslassgebläse im Nasskanal (111) eingebaut sind.

4. Vorrichtung nach Anspruch 1, die ferner Folgendes umfasst:
- einen zweiten Filter (170), der zwischen dem Ansaugloch (116) für die zirkulierte Luft und dem Entfeuchtungsrad (150) eingebaut ist und dazu dient, in der zirkulierten Luft enthaltene Verunreinigungen zu entfernen; und
- ein Luftzuführgebläse (180), das zwischen dem Entfeuchtungsrad (150) und der Austauscheinrichtung (130) für fühlbare Wärme eingebaut ist und dazu dient, die gekühlte, zirkulierte Luft aus dem Trockenkanal (115) durch das Luftzuführloch zwingend auszulassen, wobei der zweite Filter (170) und das Luftzuführgebläse (180) im Trockenkanal (115) eingebaut sind.

5. Vorrichtung nach Anspruch 1, wobei das Gehäuse (110) ferner ein Kühlerauslassloch (118) aufweist, das zum Auslassen der Hochtemperaturluft, die erzeugt wird, während der Wiederaufbereitungsverdampfungskühler (190) einen sekundären Kühlvorgang ausführt, am Trockenkanal (115) vorgesehen ist.

6. Vorrichtung nach Anspruch 5, wobei die Menge der durch das Kühlerauslassloch (118) auszulassenden Hochtemperaturluft 30 % der gesamten zirkulierten Luft beträgt.

7. Vorrichtung nach Anspruch 1, wobei das in die Heizspule (140) einzubringende, heiße Wasser von einer beliebigen Einrichtung geliefert wird, die aus einem Kraft-Wärmekopplungs-Kraftwerk, einem Heizkessel, einer Mikroturbine, einer kleinen Gaskraftmaschine, einer kleinen Gasturbine, einem Gaskessel und einem Ölkessel ausgewählt ist.

8. Vorrichtung nach Anspruch 1, wobei die zirkulierte Luft, die durch das Ansaugloch (116) für die zirkulierte Luft angesaugt wird, in einem vorgegebenen Mischverhältnis mit der Außenluft gemischt ist.

9. Vorrichtung nach Anspruch 1, wobei das vorgegebene Mischverhältnis der zirkulierten Luft zur Außenluft 7 : 3 beträgt.

## Revendications

1. Système de déshumidification par refroidissement pour chauffage urbain, comprenant :
- un carter (110) ayant une cloison (119) pour diviser l'intérieur du carter (110) en un canal humide (111) et un canal sec (115), le canal humide (11) étant doté, à l'une de ses extrémités, d'un trou d'aspiration d'air extérieur (113) pour introduire de l'air extérieur dans le canal humide (111) et, à son autre extrémité, d'un trou d'échappement (612) pour décharger l'air extérieur, le canal sec (115) étant doté, à l'une de ses extrémités, d'un trou d'aspiration d'air en circulation (116) pour introduire de l'air en circulation depuis un espace de conditionnement vers le canal sec (115) et, à son autre extrémité, d'un trou d'alimentation d'air pour alimenter de l'air de refroidissement dans l'espace de conditionnement ;
- un échangeur de chaleur sensible (130) configuré pour tourner autour de la cloison (119) et servant à échanger de la chaleur avec l'air extérieur, introduit dans le canal humide (111) à travers le trou d'aspiration d'air extérieur (113), avec l'air en circulation introduit dans le canal sec (115);
- une épingle chauffante (140) installée dans le canal humide (111) à une position entre une extrémité arrière de l'échangeur de chaleur sensible (130) et le trou d'échappement (112) et servant à faire monter la température de l'air extérieur qui passe à travers le canal humide (111) en utilisant la chaleur de l'eau chaude introduite dans l'épingle chauffante (140) ;
- une roue de déshumidification (150) configurée pour tourner autour de la cloison (119) à une position derrière l'épingle chauffante (140) et servant à adsorber et à supprimer l'humidité contenue dans l'air en circulation à l'intérieur du canal sec (115), la roue de déshumidification (150) étant régénérée en faisant évaporer l'humidité adsorbée pour alimenter ainsi l'humidité évaporée vers l'air extérieur à haute température dans le canal humide (111) ; **caractérisé par**
- un dispositif de refroidissement à évaporation/régénération (190) installé dans le canal sec (115) à une position entre le trou d'alimentation d'air en circulation et l'échangeur de chaleur sensible (130) et servant à refroidir l'air en circulation dans le canal sec (115), qui a été déshumidifié pour donner de l'air sec à haute température par la roue de déshumidification (150), et ultérieurement soumis à un échange de chaleur et à un refroidissement par l'échangeur de chaleur sensible (130), l'air en circulation refroidi étant fourni au trou d'alimentation d'air du carter (110).

2. Dispositif selon la revendication 1, comprenant en outre :
- un dispositif de refroidissement à évaporation directe (200) installé dans le canal sec (115) à une position en face du dispositif de refroidissement à évaporation/régénération (190), le dispositif de refroidissement à évaporation directe (200) servant à effectuer une opération de refroidissement secondaire de l'air en circulation déchargé hors du dispositif de refroidissement à évaporation/régénération (190).

3. Dispositif selon la revendication 1, comprenant en outre :
- un premier filtre (120) installé entre le trou d'aspiration d'air extérieur (113) et l'échangeur de chaleur sensible (130) et servant à supprimer des impuretés contenues dans l'air extérieur ; et
- un ventilateur d'échappement installé entre la roue de déshumidification (150) et le trou d'échappement (112) et servant à décharger à force l'air extérieur depuis le canal humide (111) à travers le trou d'échappement (112), dans lequel le premier filtre (120) et le ventilateur d'échappement sont installés dans le canal humide (111).

4. Dispositif selon la revendication 1, comprenant en outre :
- un second filtre (170) installé entre le trou d'aspiration d'air en circulation (116) et la roue de déshumidification (150) et servant à supprimer des impuretés contenues dans l'air en circulation ; et
- un ventilateur d'alimentation d'air (180) installé entre la roue de déshumidification (150) et l'échangeur de chaleur sensible (130) et servant à décharger à force l'air en circulation refroidi depuis le canal sec (115) à travers le trou d'alimentation d'air, dans lequel le second filtre (170) et le ventilateur d'alimentation d'air (180) sont installés dans le canal sec (115).

5. Dispositif selon la revendication 1, dans lequel le carter (110) comporte en outre un trou d'échappement de refroidissement (118) prévu au niveau du canal sec (115) pour décharger l'air à haute température généré alors que le dispositif de refroidissement à évaporation/régénération (190) effectue une opération de refroidissement secondaire.

6. Dispositif selon la revendication 5, dans lequel la quantité d'air à haute température à décharger à travers le trou d'échappement de refroidissement (118) est de 30 % de la totalité de l'air en circulation.

7. Dispositif selon la revendication 1, dans lequel l'eau chaude à introduire dans l'épingle chauffante (140) est fournie depuis un dispositif quelconque sélectionné parmi une installation de cogénération, une chaudière, une micro-turbine, un petit moteur à gaz, une petite turbine à gaz, une chaudière à gaz, et une chaudière à fioul.

8. Dispositif selon la revendication 1, dans lequel l'air en circulation aspiré à travers le trou d'aspiration d'air en circulation (116) est mélangé avec l'air extérieur sous un rapport de mélange prédéterminé.

9. Dispositif selon la revendication 1, dans lequel le rapport de mélange prédéterminé de l'air en circulation sur l'air extérieur est de 7:3.
